Europäisches Patentamt

European Patent Office

Office européen des brevets

(11) Veröffentlichungsnummer: **0 515 909 A1**

(12) **EUROPÄISCHE PATENTANMELDUNG**

(21) Anmeldenummer: **92108077.6**

(22) Anmeldetag: **13.05.92**

(51) Int. Cl.5: **A01D 34/00**, A01G 3/06

(30) Priorität: **27.05.91 DE 4117340**

(43) Veröffentlichungstag der Anmeldung:
**02.12.92 Patentblatt 92/49**

(84) Benannte Vertragsstaaten:
**AT BE CH DE DK FR GB IT LI NL SE**

(71) Anmelder: **WOLF-Geräte GmbH**
**Vertriebsgesellschaft KG**
**Gregor-Wolf-Strasse**
**W-5240 Betzdorf/Sieg(DE)**

(72) Erfinder: **Orthey, Gebhard**
**Raiffeisenstrasse 18**
**W-5241 Nauroth(DE)**
Erfinder: **Beer, Bernhard**
**Büscherhof 4**
**W-5220 Waldbröhl(DE)**
Erfinder: **Benke, Wolfgang**
**Geleitstrasse 46**
**W-6050 Offenbach(DE)**
Erfinder: **Ullmann, Roland**
**Edith-Stein-Strasse 8**
**W-6050 Offenbach-Rumpenheim(DE)**

(74) Vertreter: **Koch, Günther, Dipl.-Ing. et al**
**P.O. Box 121120**
**W-8000 München 12(DE)**

(54) **Fadenschneider.**

(57) Die Erfindung betrifft einen Fadenschneider mit einem zwischen Motorgehäuse 30 und Obergriff 18 angeordneten Mittelgriff 24, der längs des Rohrstieles 16 verschiebbar und um 180° verdrehbar ist. Der Mittelgriff ist am Rohrstiel in verschiedenen Stellungen formschlüssig über einen Riegel aushebbar, der in Löcher des Rohrstieles eingreift. Der Rohrstiel ist mit dem Motorgehäuse über ein Kippgelenk 12 verbunden, das mit Rastvorsprüngen und Rastvertiefungen ausgestattet ist, die elastisch ausweichen und in verschiedenen Raststellungen einfallen können.

FIG. 1

Die Erfindung bezieht sich auf einen Fadenschneider mit einem kippbar am Motorgehäuse angelenkten Stiel, der an seinem freien Ende einen Obergriff und im Mittelabschnitt einen Mittelgriff trägt. Ein derartiger Fadenschneider ist aus der EP 005 540 A1 bekannt. Bei diesem bekannten Fadenschneider ist der Mittelgriff als konzentrisch zur Stielachse angeordnete Radscheibe ausgebildet und der Obergriff ist um die Stielachse schwenkbar. Das Kippgelenk zwischen Stiel und Motorgehäuse ermöglicht über ein Rastsegment eine Festlegung des Stiels relativ zur Schneidebene in unterschiedlichen Winkelstellungen. Die formschlüssige Verrastung ist über einen am Motorgehäuse in der Nähe der Kippachse vorgesehenen Entriegelungsknopf auslösbar. Hierdurch wird es möglich, Stiel und Führungsgriff in der, für den jeweiligen Schneidvorgang ergonometrisch günstigsten Winkellage zu orientieren, so daß auch in der Nähe von Hindernissen und unter Büschen ein sauberer und gezielter Schnitt durchgeführt werden kann. Da die Lage des Mittelgriffs für eine durchschnittliche Personengröße bestimmt war, konnten sich gewisse Schwierigkeiten in der Handhabung dann ergeben, wenn das Gerät von überdurchschnittlich großen oder unterdurchschnittlich kleinen Menschen, wie z.B. Kindern, bedient wurde.

Der Erfindung liegt daher die Aufgabe zugrunde, die Möglichkeit einer Griffeinstellung entsprechend der Körpergröße zu schaffen, um längere Zeit ermüdungsfrei mit dem Gerät arbeiten zu können, wobei gleichzeitig die Einstellung auf einfache Weise vorgenommen werden kann, während das Gerät in der Arbeitsstellung gehalten wird.

Gelöst wird die gestellte Aufgabe durch die im Kennzeichnungsteil des Patentanspruchs 1 angegebenen Merkmale.

Durch Verschieben des Mittelgriffs kann die jeweils günstigste Stellung leicht durch Versuch ermittelt werden. Für Rasenkanten und Problemstellen im Gartenbereich kann die Schneidebene auch senkrecht gestellt werden, wobei der Mittelgriff so um die Stielachse verdreht werden kann, wie dies für die Bedienung am bequemsten ist.

Es ist durch die US-A-4 052 789 zwar bereits ein Fadenschneider bekannt, bei dem der Mittelgriff um die Stielachse verdrehbar und der Stiel teleskopartig ausfahrbar ist, jedoch konnte bei diesem bekannten Fadenschneider der Griff nicht in jeder gewünschten Stellung längs der Stielachse angeordnet werden, wie dies bei der Erfindung der Fall ist.

Nach einer weiteren Ausgestaltung der Erfindung erfolgt die Verstellung der Schiebehülse an einem Rohrstiel stufenweise, wobei eine Verriegelung über einen in Löcher des Stieles eingreifenden Riegel bewirkt wird, der durch einen mit dem Mittelgriff vereinigten Zuggriff aushebbar und unter Federkraft einrastbar ist. Die Verstellung erfolgt über eine Kulissenführung in Längsrichtung und in Umfangsrichtung, wobei die Führung die stufenweise Einstellung bedingt. Um eine einmal als zweckmäßig erkannte Stellung wiederzufinden, können entsprechende Markierungen zwischen Schiebehülse und Stielrohr vorgesehen werden.

Ein wesentlicher Vorteil der Erfindung besteht darin, daß mit einem Bedienungselement, nämlich mit dem am Mittelgriff angeordneten Zuggriff zwei Funktionen, nämlich die Längsverstellung am Stiel und die Verdrehung durchgeführt werden können.

Um den Bedienungskomfort zu erhöhen und die Kippwinkeleinstellung weiter zu vereinfachen, sieht die Erfindung eine Bedienung vom Obergriff aus vor, wobei durch einfaches Durchrasten eines Rastelements das Gelenk verstellt wird. Hierdurch wird es überflüssig sich zu bücken, sich hinzuknien oder das Gerät aufzunehmen, um den beim eingangs genannten Stand der Technik vorhandenen Auslöseknopf zu drücken. Es ist zwar bereits ein Fadenschneider bekannt, bei dem die Kippverrastung über ein Schaltelement aufgehoben werden konnte, das in Bedienungsgriffnähe angeordnet war, hierbei war jedoch dieses Schaltelement über eine zusätzliche, parallel zum Stiel geführte Stange zu betätigen, die den Aufbau des Gerätes kompliziert gestaltete und störempfindlich gegen Stöße war.

Nach einer weiteren Ausgestaltung der Erfindung ist das Motorgehäuse konisch bzw. kegelförmig ausgebildet, wobei das Kippgelenk in der Konusspitze liegt und der Mantel bis in die Höhe des Schneidfadens nach unten und außen gezogen ist, wobei im Schneidbereich eine Gehäuseausnehmung vorgesehen ist. Ein in der Nähe der Schneidebene vorgesehener Schutzbügel schützt einmal die Bedienungsperson und kann außerdem als Trittfläche für einen Fuß benutzt werden, wenn der Stiel in die gewünschte Kippstellung verdreht wird.

Nachstehend wird ein Ausführungsbeispiel der Erfindung anhand der Zeichnung beschrieben. In der Zeichnung zeigen:

Fig. 1 eine Seitenansicht eines erfindungsgemäß ausgebildeten Fadenschneiders;

Fig. 2 in größerem Maßstab eine Ansicht des Mittelgriffes mit der ihn tragenden Schiebehülse, welche aufgebrochen dargestellt ist;

Fig. 3 einen Schnitt nach der Linie III-III gemäß Fig. 2;

Fig. 4 einen Schnitt nach der Linie IV-IV gemäß Fig. 2;

Fig. 5 eine Schnittansicht des Kippgelenkes, wobei die Kippachse in der Schnittebene liegt;

Fig. 6 einen Schnitt nach der Linie VI-VI gemäß Fig. 5.

Der Fadenschneider weist ein Motorgehäuse 10 auf, welches über ein Kippgelenk 12 mit einem Rohrstiel 16 verbunden ist, der in eine Tülle 14 des Gelenkes eingesteckt und in dieser gesichert ist. Am oberen Ende des Rohrstieles 16 ist ein Obergriff 18 festgelegt, aus dem die Netzleitung 20 vorsteht, und in dem ein mit dem Zeigefinger zu betätigender Schalter 22 in Form eines Pistolenabzugs angeordnet ist. Ein Mittelgriff 24 ist fest mit einer Schiebehülse 26 verbunden, die auf dem Rohrstiel 16 verschiebbar und um diesen Rohrstiel begrenzt drehbar ist.

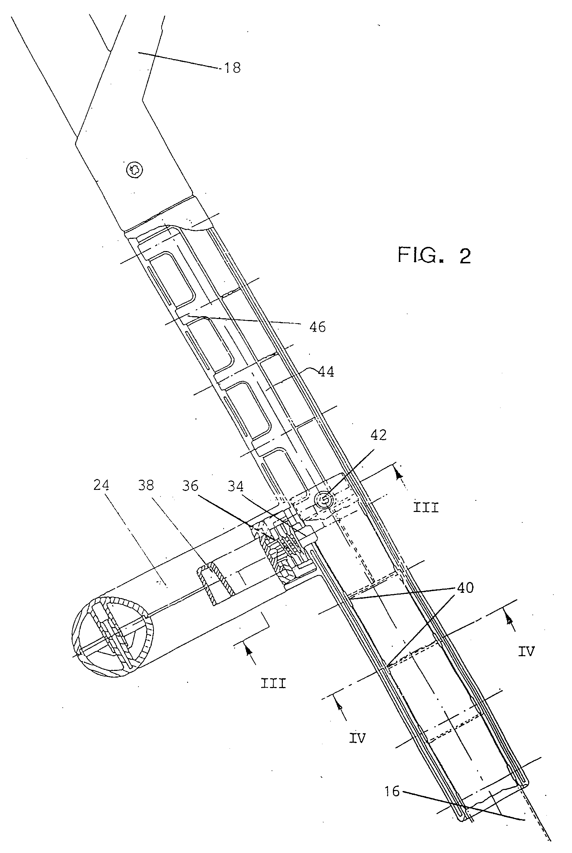

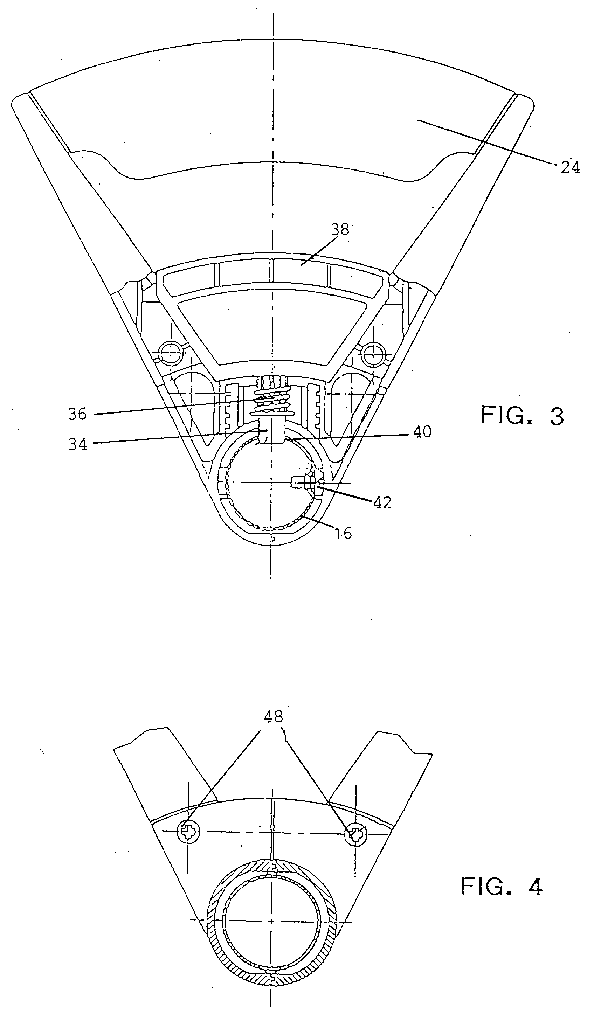

Die Ausbildung der Schiebehülse und des Mittelgriffs ist aus den Figuren 2 bis 4 ersichtlich. Der aus zwei Halbschalen zusammengefügte Mittelgriff 24, der von der Schiebehülse 26 getragen wird, weist einen Riegel 34 auf, der bezüglich des Rohrstieles 16 radial verschiebbar ist und unter der Wirkung einer Feder 36 nach innen gedrückt wird. Durch einen Zuggriff 38, der innerhalb des Mittelgriffs 24 verschiebbar gelagert ist, kann der Riegel 34 ausgehoben werden, der in Rastlöcher 40 eingreift, die im Abstand von beispielsweise 15 mm über den Rohrstiel 16 auf zwei diametral gegenüberliegenden Seiten angeordnet sind.

In den Rohrstiel ist eine Schraube eingesetzt, deren Kopf 42 radial nach außen über den Rohrstiel vorsteht. Dieser Schraubenkopf 42 läuft in Längsnuten 44, die auf der Innenseite der Schiebehülse 26 ausgebildet sind. Diese Längsnuten 44 befinden sich auf zwei diametral gegenüberliegenden Mantellinien und sie sind durch Quernuten 46 verbunden, die über den inneren Umfang der Schiebehülse 26 verlaufen. Auf diese Weise wird es möglich, den Mittelgriff über die Länge der Längsnuten 44 auf dem Rohrstiel 16 zu verschieben, wobei der Schraubenkopf 42 durch die Quernuten 46 so geführt ist, daß ein Anschlag an einer durch ein Loch 40 bestimmten Raststelle erfolgt. Der Mittelgriff 24 kann nach Zurückziehen des Riegels 34 um 180° auf dem Rohrstiel verdreht werden, wobei der Schraubenkopf 42 in einer Quernut 46 verläuft. Die Schraube 42 wird zur Montage durch ein Loch der Schiebehülse 26 in den Rohrstiel 16 eingeschraubt. Dann kann der Rohrstiel nicht mehr von der Schiebehülse getrennt werden, da der Schraubenkopf 42 durch die Nut geführt ist und formschlüssig durch die Nutwandung gehalten wird. Die Schraube könnte auch durch einen aus Kunststoff bestehenden Rastbolzen ersetzt sein.

Der Mittelgriff 24 wird komplett mit Zuggriff 38, Feder 36 und Riegel 34 vormontiert. Er kann aus verpackungstechnischen Gründen getrennt geliefert und später vom Kunden mit zwei Schrauben 48 an der Schiebehülse montiert werden.

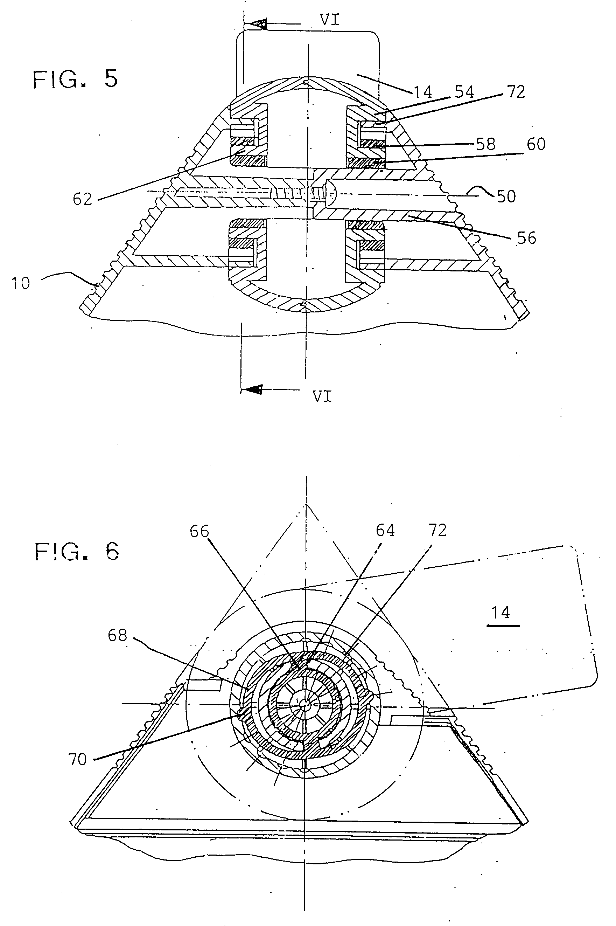

Das Kippgelenk 12 zwischen Rohrstiel 16 und Motorgehäuse 10 ist in den Figuren 5 und 6 im einzelnen dargestellt. Die den Rohrstiel 16 tragende Tülle 14 ist gegenüber dem Motorgehäuse 10 um eine Achse 50 kippbar. Zu diesem Zweck weisen die beiden Motorgehäusehälften koaxial zur Kippachse 50 verlaufende Ringlager 52 auf, auf denen die Tülle 14 mit entsprechenden zylindrischen Lagerflächen 54 abläuft. Auf eine koaxial zur Kippachse 50 angeordnete gehäusefeste Nabe 56 ist ein Rastelement 58 aufgesetzt, welches einen inneren Zylinderring 60 aufweist, der auf der Nabe 56 läuft. Die Lagerflächen 54 der Tülle 14 tragen innere zylindrische Stützflächen 62, die durch diametral zueinander angeordnete Radialnuten 64 unterbrochen sind. Durch diese Radialnuten 64 stehen am Zylinderring 64 angeformte Radialstege 66 nach außen, die auf beiden Seiten durch federnde Bügel 68 verbunden sind. Diese Bügel liegen in einem freien Ringraum zwischen den Lagerflächen 54 und den zylindrischen Stützflächen 62. Die Bügel 68 tragen radial nach außen gerichtete, kugelkopfförmige Rastnasen 70, die mit entsprechenden Rastvertiefungen 72 der Gehäuseringlager 74 zusammenwirken. Beim Kippen des Rohrstieles 16 weichen die Rastnasen 70 zusammen mit den Bügeln 68 radial nach innen zurück und fallen dann beim Überfahren der nächsten Rastvertiefung in diese ein. Wie aus Fig. 6 ersichtlich, liegen jeweils zwei Rastnasen 70 etwa diametral gegenüber. Der Rohrstiel 16 kann aus einer vertikalen Stellung bis in die in Fig. 6 angedeutete Endstellung gekippt werden, in der der Stiel im wesentlichen horizontal verläuft.

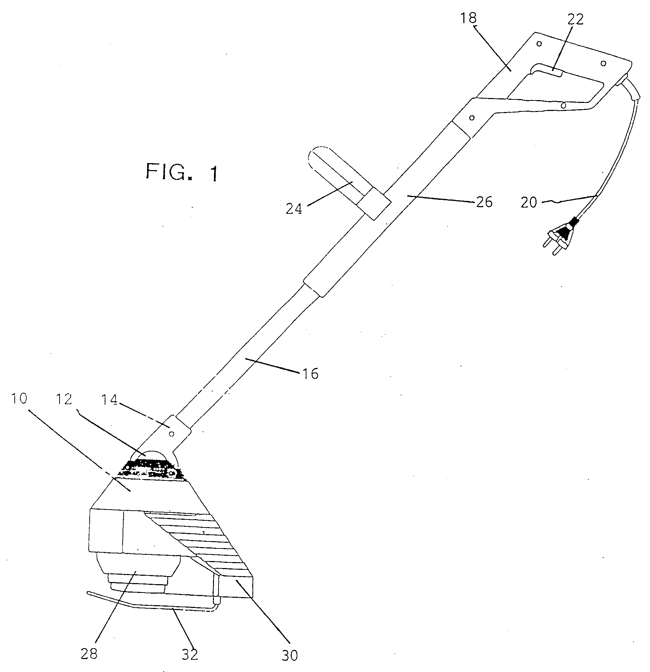

Durch die aus Fig. 1 ersichtliche zentrische Anordnung des Kippgelenks 12 über dem Schwerpunkt des Motorgehäuses wird der wirksame Hebelarm zum Mittelgriff verkürzt. Gleichzeitig wird durch die Vergrößerung des Mittelgriffs vom Griffrohr der wirksame Hebelarm gleichfalls verkürzt. Dies führt zu einer Verringerung der Haltekräfte und somit zu einer ermüdungsfreien Arbeit. Durch die Möglichkeit der Verschiebung des Mittelgriffs auf dem Stiel können die beiden wirksamen Hebelarme in optimaler Weise eingestellt werden.

Der das Gehäuse des Fadenschneiders umgebende Kegelschirm erhöht durch die rundum gespannte Fläche die Stabilität des Motorgehäuses. Wie aus Fig. 1 ersichtlich, ist dieser kegelförmige Schutzschirm mit einem Schrägausschnitt versehen, der die normale Schräghaltung beim Schneiden begünstigt und durch Abstandshalterung ein zu starkes Abbremsen des Fadenschneidergehäuses im Gras gewährleistet.

**Patentansprüche**

1. Fadenschneider mit einem kippbar am Motorgehäuse angelenkten Stiel, der an seinem freien Ende einen Obergriff und im Mittelabschnitt einen Mittelgriff trägt,
   dadurch gekennzeichnet, daß der Mittelgriff (24) auf dem Rohrstiel (16) verschiebbar und verdrehbar und in unterschiedlichen Verschiebe- und Drehstellungen festlegbar ist.

2. Fadenschneider nach Anspruch 1,
dadurch gekennzeichnet, daß der Mittelgriff (24) auf einer Schiebehülse (26) sitzt, die auf dem Rohrstiel (16) gleitbar und verdrehbar gelagert ist.

3. Fadenschneider nach Anspruch 2,
dadurch gekennzeichnet, daß die Schiebehülse stufenweise auf dem Stielrohr (16) verschiebbar ist.

4. Fadenschneider nach den Ansprüchen 1 bis 3,
dadurch gekennzeichnet, daß im Griff (24) ein aushebbarer Riegel (34) verschiebbar gelagert ist, der unter Federkraft (36) in Rastlöcher (40) des Rohrstieles (16) eingreift.

5. Fadenschneider nach Anspruch 4,
dadurch gekennzeichnet, daß die Rastlöcher (40) über die Länge und den Umfang des Stiels verteilt sind.

6. Fadenschneider nach Anspruch 5,
dadurch gekennzeichnet, daß die Löcher auf zwei diametral gegenüberliegenden Mantellinien des Stiels angeordnet sind.

7. Fadenschneider nach einem der Ansprüche 1 bis 6,
gekennzeichnet durch eine Kulissenführung (44, 46, 42) zwischen Schiebehülse und Stiel.

8. Fadenschneider nach Anspruch 7,
dadurch gekennzeichnet, daß auf der Innenseite der Schiebehülse (26) Kulissenführungen (44, 46) in Form von zwei Längsnuten (44) und diese verbindenden Umfangsnuten (46) vorgesehen sind, in die ein am Stielrohr vorgesehener Führungskopf (42) einsteht.

9. Fadenschneider nach einem der Ansprüche 1 bis 8,
dadurch gekennzeichnet, daß der Riegel (34) durch einen Zuggriff (38) aushebbar ist, der integral mit dem Mittelgriff (24) verbunden ist und von den Fingern der den Mittelgriff (24) erfassenden Hand betätigt werden kann.

10. Fadenschneider nach Anspruch 8,
dadurch gekennzeichnet, daß der Führungskopf (42) als Nutbegrenzungsanschlag zur Stufeneinstellung dient.

11. Fadenschneider nach einem der Ansprüche 1 bis 10,

dadurch gekennzeichnet, daß der Mittelgriff (24) komplett mit Zuggriff (38), Feder (36) und Riegel (34) als Baueinheit vormontiert und über Schrauben (48) an der Schiebehülse (26) montierbar ist.

12. Fadenschneider nach Anspruch 1,
dadurch gekennzeichnet, daß das Kippgelenk (12) zentrisch über dem Schwerpunkt der aus Motor und Gehäuse bestehenden Baueinheit angeordnet ist.

13. Fadenschneider nach Anspruch 12,
dadurch gekennzeichnet, daß das Kippgelenk (12) ein durchschaltbares Rastelement (58) aufweist, welches formschlüssig einrastet und federnd zurückweicht.

14. Fadenschneider nach den Ansprüchen 12 und 13,
dadurch gekennzeichnet, daß das Rastelement wenigstens einen Rastbügel aufweist, der Rastnocken (70) aufweist, die mit Rastausnehmungen (72) des Lagergehäuses zusammenwirken.

15. Fadenschneider nach Anspruch 14,
dadurch gekennzeichnet, daß das Rastelement einen eine Gehäusenabe (56) umschließenden Zylinderring (60) aufweist, der über Radialstege (66) mit den die Rasten (70) tragenden Federbügeln (68) verbunden sind.

16. Fadenschneider nach Anspruch 15,
dadurch gekennzeichnet, daß die Radialstege (66) in Radialnuten (64) einer zylindrischen Stützfläche (62) der Stieltülle (14) als Drehsicherung angeordnet sind.

17. Fadenschneider nach den Ansprüchen 12 bis 15,
dadurch gekennzeichnet, daß die Rastnasen und Ausnehmungen in 20° Winkelabständen angeordnet sind.

18. Fadenschneider nach den Ansprüchen 12 bis 17,
dadurch gekennzeichnet, daß die Rastelemente aus elastischem Kunststoff bestehen.

19. Fadenschneider nach einem der Ansprüche 1 bis 18,
dadurch gekennzeichnet, daß unterhalb des Motorgehäuses (12) ein im wesentlichen parallel zur Schneidebene angeordneter Schutzbügel (32) angeordnet ist.

20. Fadenschneider nach einem der Ansprüche 1 bis 19,
dadurch gekennzeichnet, daß das Motorgehäuse in Gestalt eines Kegelschirmes ausgebildet ist.

EP 0 515 909 A1

FIG. 1

6

FIG. 2

FIG. 3

FIG. 4

8

FIG. 5

FIG. 6

Europäisches Patentamt

# EUROPÄISCHER RECHERCHENBERICHT

Nummer der Anmeldung

EP   92 10 8077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | US-A-4 603 478 (K. K. ANDERSON)<br><br>* Spalte 2, Zeile 5 - Zeile 22; Abbildungen 1,2 *<br><br>--- | 1,11,19, 20 | A01D34/00<br>A01G3/06 |
| Y | US-A-4 823 464 (J. W. GORSKI)<br><br>* Spalte 3, Zeile 27 - Zeile 46; Abbildung 1 *<br>--- | 1,11,19, 20 | |
| Y | US-A-4 890 389 (G. H. WHITKOP)<br>* Spalte 4, Zeile 3 - Zeile 18; Abbildungen 1,2 *<br><br>--- | 19 | |
| A,D | EP-A-0 005 540 (WOLF-GERÄTE GMBH)<br>* Seite 6, Zeile 11 - Seite 7, Zeile 17; Abbildungen 1-3 *<br><br>--- | 1 | |
| A,D | US-A-4 052 789 (G. C. BALLAS)<br>* Spalte 6, Zeile 38 - Zeile 54; Abbildungen 1,2 *<br><br>--- | 1 | |
| A | EP-A-0 170 744 (R. G. EVERTS)<br><br>----- | | RECHERCHIERTE SACHGEBIETE (Int. Cl.5 )<br><br>A01D<br>A01G |

Der vorliegende Recherchenbericht wurde für alle Patentansprüche erstellt

| Recherchenort | Abschlußdatum der Recherche | Prüfer |
|---|---|---|
| BERLIN | 03 AUGUST 1992 | MERCKX A. |